# FASCICULE DE BREVET EUROPEEN

(11) **EP 3 688 350 B1**
(45) Date de publication et mention de la délivrance du brevet: **03.06.2026**
(21) Numéro de dépôt: 18774026.1
(22) Date de dépôt: 21.09.2018
(51) Int. Cl.: F16K 21/10, E03D 3/04

(54) **DISPOSITIF FORMANT ROBINET TEMPORISÉ OU CARTOUCHE DE TEMPORISATION POUR UN ROBINET TEMPORISÉ**
VORRICHTUNG ZUR HERSTELLUNG EINES MIT EINEM ZEITGEBER BETRIEBENEN HAHNS ODER EINER ZEITGEBERPATRONE FÜR EINEN MIT EINEM ZEITGEBER BETRIEBENEN HAHN
DEVICE FORMING A TIMER-OPERATED TAP OR TIMER CARTRIDGE FOR A TIMER-OPERATED TAP

(30) Priorité: 28.09.2017 FR 1771030
(43) Date de publication de la demande: 05.08.2020
(73) Titulaire: Les Robinets Presto, 92120 Montrouge (FR)
(72) Inventeur: CHAUVEAU, Stéphane, 17110 Saint-Georges-de-Didonne (FR); BACQUET, Grégory, 17110 Saint-Georges-de-Didonne (FR); GRANSEIGNE, Laurent, 17110 Saint-Georges-de-Didonne (FR)
(74) Mandataire: Eidelsberg, Olivier Nathan
(86) Numéro de dépôt international: PCT/EP2018/075666
(87) Numéro de publication internationale: WO 2019/063441

(56) Documents cités:
- EP-A1- 0 928 918
- WO-A1-2015/043080
- DE-A1- 3 835 497
- DE-U1- 29 608 014
- GB-A- 2 158 203
- US-A- 3 376 013
- US-A- 4 819 909
- US-A- 4 973 025

## Description

La présente invention se rapporte à une cartouche de temporisation pour un dispositif formant robinet temporisé, notamment pour une utilisation dans des lieux publics à grande fréquentation ou des collectivités, tels que des écoles ou des hôpitaux.

Classiquement, une cartouche de temporisation ou un robinet temporisé comporte un obturateur reçu dans un siège ; des moyens d'actionnement comportant une tige, dont le déplacement entraîne la sortie de l'obturateur du siège pour permettre le passage d'un fluide d'alimentation, notamment de l'eau, notamment froide ou chaude, d'un conduit d'alimentation d'eau vers un conduit de sortie d'eau ; et des moyens de temporisation destinés à faire en sorte que l'obturateur revienne dans son siège au bout d'un intervalle de temps déterminé à l'avance.

Des moyens de temporisation classique sont constitués par le fait de prélever une petite partie du débit du fluide d'alimentation, notamment de l'eau, en mode d'ouverture du robinet pour remplir progressivement une chambre de temporisation, le remplissage de la chambre de temporisation ayant pour effet de ramener l'obturateur dans son siège en position de fermeture du robinet.

Bien que donnant des résultats satisfaisants, cette technique de temporisation est dépendante de la pression et de la température du fluide d'alimentation, notamment de l'eau, notamment dans le conduit d'alimentation issu du réseau, et donc de la pression du réseau, ainsi que de la propreté et de la température de l'eau fournie par le réseau. En outre, pour l'ouverture du robinet, quelle soit manuelle ou électronique, il est nécessaire de mettre en œuvre une force importante pour chasser l'eau de la chambre de temporisation, ce qui implique soit une fatigue pour l'utilisateur dans le cas d'une ouverture manuelle, par exemple par appui sur un bouton poussoir, soit des contraintes et des coûts élevés pour un dispositif électronique. On connaît de DE 38 35 497 A1 un dispositif formant robinet temporisé suivant le préambule de la revendication 1.

La présente invention vise à surmonter les inconvénients de l'art antérieur en proposant un dispositif formant robinet temporisateur, dont l'ouverture peut d'une part être réalisée sans qu'il soit nécessaire d'avoir à surmonter une grande force et notamment également sans que cette force, et donc la durée de temporisation, ne varie en fonction de la pression de l'eau dans le réseau d'alimentation, de la température ou de la propreté de l'eau.

Suivant l'invention, un dispositif formant robinet temporisé ou une cartouche de temporisation pour un dispositif formant robinet temporisé est tel que défini à la revendication 1, des perfectionnements et modes de réalisation préférés étant définis aux sous revendications.

En prévoyant ainsi un obturateur intermédiaire sur lequel agit une temporisation indépendante du fluide d'alimentation, et notamment le fluide d'alimentation n'agissant pas sur la temporisation de l'obturateur intermédiaire, tout en prévoyant une synchronisation avec l'obturateur principal, on obtient avantageusement que la temporisation du robinet n'est plus dépendante du fluide d'alimentation. Il en résulte que le fonctionnement du robinet est plus stable, notamment par rapport aux variations de la température extérieure de la température du fluide fournie par le réseau. De même, la durée de la temporisation est stabilisée.

De préférence, la synchronisation des obturateurs principal et intermédiaire est telle que lorsque l'obturateur intermédiaire est dans son siège intermédiaire, l'obturateur principal est également dans son siège principal et, lorsque l'obturateur intermédiaire n'est pas dans son siège intermédiaire, l'obturateur principal n'est pas non plus dans son siège principal.

Suivant un mode de réalisation préféré de l'invention, les moyens de temporisation comportent une chambre de temporisation principale qui agit sur le déplacement de la tige de commande, la chambre de temporisation étant remplie d'un fluide de temporisation, notamment différent du fluide d'alimentation, par exemple de l'air.

Il en résulte que pour faire sortir l'obturateur principal du siège, l'utilisateur n'a plus à mettre en œuvre qu'une faible force nécessaire pour décharger à l'extérieur du robinet le fluide de temporisation, par exemple l'air, qui a une viscosité plus faible et moins dépendante de la température que celle du fluide d'alimentation. Par exemple, dans le cas d'un bouton poussoir commandant le déplacement de la tige, l'utilisateur ouvre le robinet sans effort. En outre, dans le cas de l'air, il s'agit d'un fluide facile à disposer, puisque déjà présent par défaut dans tous les composants.

Suivant un exemple de réalisation, ne faisant pas partie de l'invention, l'obturateur intermédiaire est solidaire de la tige de commande et l'agencement est tel que le déplacement de la tige, également appelée plongeur, dans une direction par les moyens de commande entraîne le retrait de l'obturateur principal du siège dans un sens différent, notamment opposé, au sens de déplacement du plongeur.

Suivant l'invention, l'obturateur intermédiaire est constitué d'une membrane souple, notamment en matériau élastomère, la tige d'actionnement venant pousser la membrane dans le siège intermédiaire pour faire passer l'obturateur principal également dans le siège principal et la tige s'éloignant et sortant de sa liaison mécanique avec la membrane pour la libérer, pour la faire sortir de son siège intermédiaire et par la même faire sortir l'obturateur principal de son siège principal.

Suivant un mode de réalisation préféré de l'invention, il est prévu une chambre de décharge intermédiaire qui peut se remplir du fluide d'alimentation entre les deux obturateurs, l'agencement de la synchronisation étant tel que, lorsque les deux obturateurs principal et intermédiaire sont reçus dans leur siège respectif, la chambre de décharge intermédiaire est vide ou sensiblement vide et, lorsque les deux obturateurs intermédiaire et principal sont sortis de leur siège respectif, la chambre de décharge intermédiaire est remplie de fluide d'alimentation.

Ainsi, le fluide d'alimentation n'assure que la synchronisation entre les deux obturateurs, mais pas la temporisation des obturateurs, et notamment du passage du fluide d'alimentation.

Suivant un mode de réalisation préféré de l'invention, le siège principal de l'obturateur principal est disposé axialement par rapport au robinet, tandis que l'autre ouverture d'entrée-sortie est disposée radialement.

Suivant un mode de réalisation préféré de l'invention, l'ouverture axiale est l'ouverture d'arrivée d'eau, tandis que la ou les ouverture(s) de sortie d'eau est/sont disposée(s) radialement.

De préférence, le déplacement de la tige de commande pour commander le passage de l'obturateur hors de son siège se fait par poussée vers l'obturateur.

Suivant un mode de réalisation préféré de l'invention, la chambre de temporisation est alimentée par un canal d'admission de fluide de temporisation, dont la section peut être commandée par une vis de réglage.

Suivant un perfectionnement, il est prévu des moyens d'évacuation sans retour du fluide de temporisation de la chambre de temporisation, notamment un joint à lèvre.

De préférence, les axes des deux obturateurs principal et intermédiaire par rapport à leur siège respectif sont parallèles, notamment verticaux.

De préférence, les deux obturateurs se déplacent par rapport à leur siège non seulement dans la même direction mais aussi dans le même sens.

A titre d'exemple, on décrit maintenant des modes de réalisation en se reportant aux dessins, dans lesquels :
- La figure 1: représente suivant une vue en coupe longitudinale une cartouche de temporisation suivant un premier mode de réalisation ne faisant pas partie de l'invention ;
- Les figures 2A à 2F: représentent la cartouche de la figure 1 en des positions différentes pour en illustrer le fonctionnement ; et
- Les figures 3A à 3D: représentent la cartouche de temporisation du mode de réalisation de l'invention en des positions différentes pour en illustrer le fonctionnement.

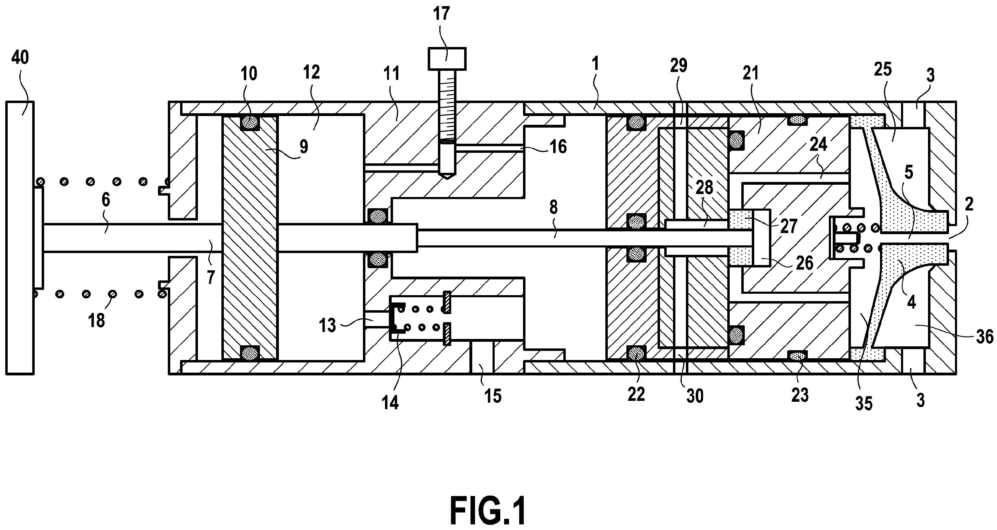

A la figure 1, la cartouche de temporisation représentée comporte un corps 1 principal de forme sensiblement tubulaire cylindrique comportant à son extrémité inférieure une ouverture 2 d'arrivée ou d'alimentation en eau, des ouvertures 3 radiales de sortie d'eau étant disposées également à la partie inférieure du robinet. Un obturateur 4 principal sous la forme d'une membrane comportant un fil frein 5 est reçu dans le siège principal formé dans l'ouverture 2.

Un plongeur 6 solidaire d'un bouton poussoir 40 est agencé pour s'étendre à l'intérieur du corps 1. Le plongeur 6 est solidaire d'une plaque 9 qu'il traverse. La plaque 9 peut coulisser le long de la paroi intérieure du corps 1 de manière étanche au niveau de son interface avec la paroi 1 par l'intermédiaire d'un joint torique 10 d'étanchéité. La plaque 9 définit avec un bloc 11 une chambre 12 de temporisation, dans laquelle est reçu de l'air.

Il est formé dans le bloc 11 un canal 13 de passage d'air fermé par un clapet 14 antiretour. Un canal 15 met en communication la sortie du clapet 14 et l'extérieur. Il est formé en outre dans le bloc 11 un canal 16 dit canal ou chemin de temporisation, dont la section peut être modifiée par l'intermédiaire d'une vis 17 de réglage de temporisation. Le canal 16 débouche d'une part dans la chambre 12 et est d'autre part en communication avec le canal 15 de prise d'air.

Un ressort de rappel 18 assure le retour du bouton poussoir 40 vers le haut une fois que l'utilisateur a relâché la pression sur le bouton poussoir.

Dans la partie inférieure du robinet, au-dessus de la zone où se trouve l'obturateur 4 principal en forme de membrane, est disposé un bloc 21 inférieur intérieur, fixé à la paroi du corps 1 de robinet. Ce bloc est fixé de manière étanche à la paroi du corps 1 avec interposition de joints d'étanchéité toriques 22 et 23. Il est formé dans ce bloc 21 plusieurs canaux. Le bloc 21 comporte un canal 24 de forme annulaire débouchant en partie basse dans une chambre 25, dans laquelle est reçue la membrane 4, et en partie supérieure dans une chambre 26, dans laquelle est reçu un obturateur 27 intermédiaire solidaire de l'extrémité inférieure du plongeur 6. Le plongeur 6 traverse en partie le bloc 21 dans un canal 28 vertical débouchant au-dessus de la chambre 26. Deux canaux 29 et 30 horizontaux s'étendent dans le bloc 21 entre le canal 28 vertical et l'extérieur du robinet.

La membrane formant l'obturateur principal sépare la chambre 25 en deux compartiments, à savoir un compartiment 35 supérieur et un compartiment 36 inférieur.

Le fonctionnement de la cartouche ou du robinet comportant la cartouche s'effectue de la manière suivante.

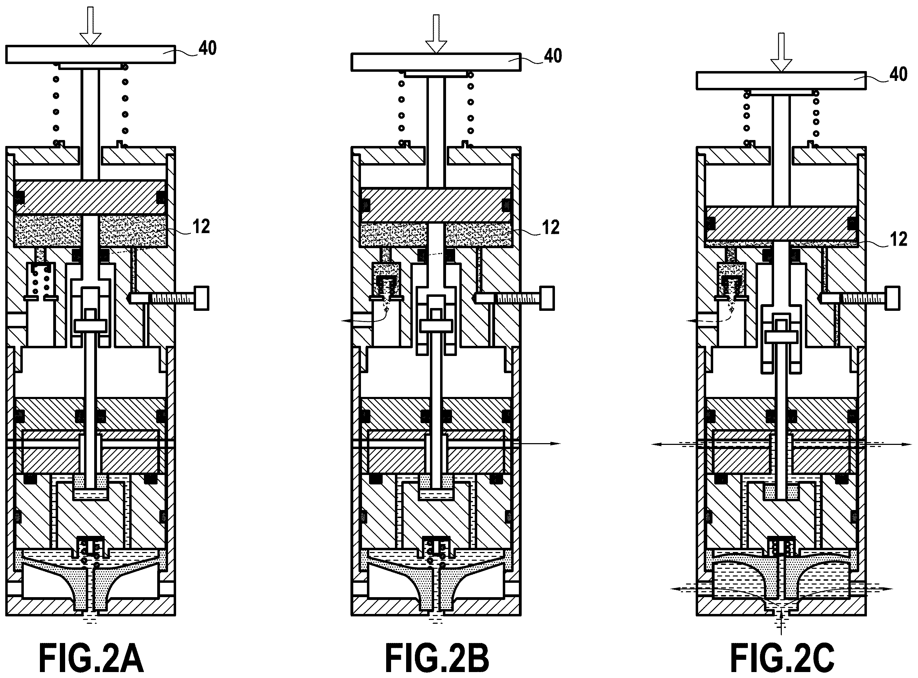

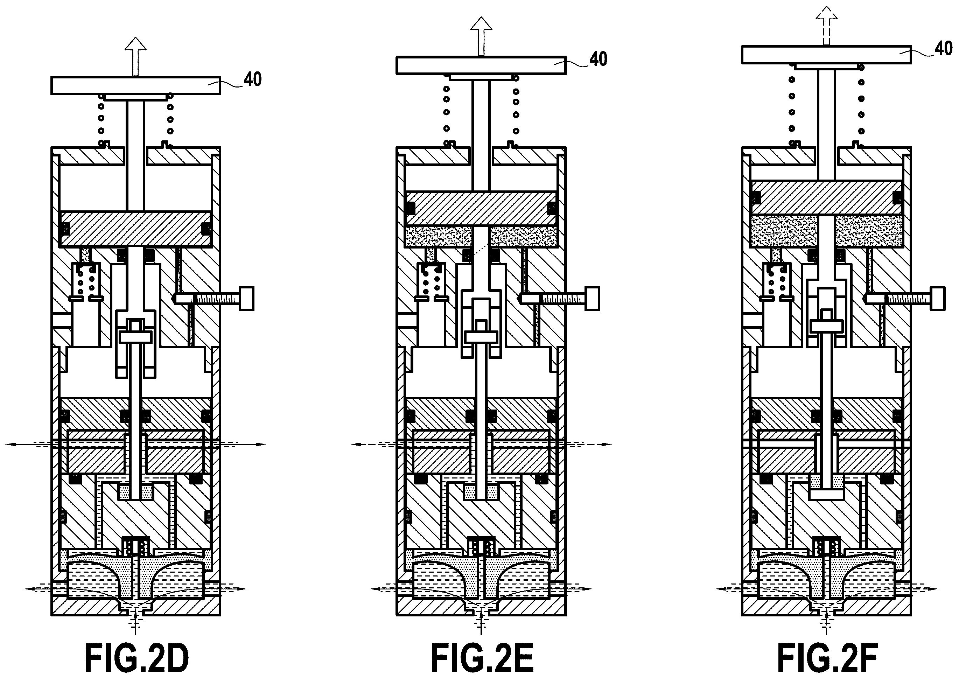

A partir de la position représentée à la figure 2A, dans laquelle le robinet est à l'état fermé, la membrane 4 reposant dans son siège de l'ouverture 2 axiale pour ainsi empêcher le passage de l'eau du réseau de l'ouverture 2 vers les ouvertures 3 radiales de sortie, l'utilisateur appuie sur le bouton poussoir 40. Ceci a pour effet de presser la plaque 9 vers le bloc 11 par l'intermédiaire du plongeur et d'expulser l'air de la chambre 12 de temporisation vers l'extérieur par l'intermédiaire du canal 13, du clapet antiretour 14 et du canal 15 de sortie. Dans le même temps, le plongeur 6 solidaire de la plaque 9 descend et vient presser l'obturateur 27 intermédiaire dans le fond de la chambre 26 intermédiaire. Il en résulte que l'obturateur 27 intermédiaire sort de son siège intermédiaire et laisse passer l'eau du compartiment 36 de la chambre 25 par le canal 24 annulaire, le canal 28 vertical et les canaux 29 et 30 horizontaux pour une décharge vers l'extérieur. Ainsi, le fluide d'alimentation, ici de l'eau, resté en suspens dans le compartiment 35 supérieur de la chambre 25, c'est-à-dire du côté opposé à l'ouverture 2, et qui maintenait en pression la membrane 4 dans son siège, se décharge à l'extérieur. Il en résulte que la membrane 4 n'est plus soumise à une pression du côté supérieur et, sous l'effet du fluide du réseau, sort de son siège dans l'ouverture 2 en allant vers le haut. Elle ouvre ainsi l'ouverture 2 et permet le passage du fluide d'alimentation entre l'ouverture 2 axiale et les ouvertures 3 radiales pour ainsi faire passer le robinet dans une position d'ouverture, dans laquelle les deux obturateurs 4 et 27 sont sortis de leur siège respectif.

Lorsque l'utilisateur cesse d'appuyer sur le bouton 40, le ressort 18 de rappel tend à ramener le plongeur 6 vers le haut. En outre, de l'air passe par l'intermédiaire de l'orifice 15 dans le canal 16 vers la chambre 12 en passant à travers la vis 17 de réglage, qui règle le débit de l'air de retour dans la chambre 12. Lorsque la chambre 12 est de nouveau totalement remplie d'air, cela a pour effet de ramener également vers le haut la tige 8, de sorte que l'obturateur 27 intermédiaire est de nouveau disposé dans son siège à distance du fond de la chambre 26. De l'eau remplit alors les canaux 24 et le compartiment 35 supérieur de la chambre 25 au-dessus de la membrane 4 par le fil frein 5 jusqu'à repousser cette dernière contre le siège 2. On se retrouve alors de nouveau dans la position de départ, à savoir une position de fermeture du robinet, dans laquelle les deux obturateurs 4 et 27 sont dans leur siège.

Ainsi, comme on le voit, l'utilisateur peut facilement presser le bouton poussoir 40 pour ouvrir le robinet, seule une force faible pour expulser l'air du compartiment 12 étant nécessaire. Dans le même temps cependant, la membrane 4 est maintenue en position fermée par une force bien plus importante que la force faible nécessaire à l'ouverture, l'eau dans le compartiment 35 exerçant une pression sur la membrane 4 bien plus forte que la pression exercée par l'air sur la plaque 9. On a ainsi, par rapport à l'art antérieur, dissocié les fonctions des fluides, respectivement de temporisation et d'alimentation, chaque fluide ayant sa fonction, l'un, l'air, que l'on chasse dans l'atmosphère, pour ouvrir le robinet et l'autre, l'eau, pour presser contre la membrane pour éviter des fuites en position de fermeture du robinet. En outre, la durée de remplissage de la chambre de temporisation ne varie presque plus en fonction de la température extérieure à laquelle est soumis le robinet, la viscosité de l'air, facteur déterminant la durée de remplissage de la chambre à travers la section du canal 16, ne variant que très peu en fonction de la température.

Par exemple, l'air, à la pression normale de 1atm, a une viscosité dynamique de 0,0168 mPa.s à -10°C, de 0,01786 mPa.s à 0°C et de 0,0198 mPa.s à 50°C, tandis que l'eau a une viscosité dynamique de 1,308 mPa.s à 10°C et de 0,54 mPa.s à 50°C.

On a décrit ci-dessus un mode de réalisation comportant un bouton poussoir. On pourrait à la place prévoir une manette pivotante ou tout autre moyen de commande mécanique.

En outre, on a décrit ci-dessus un robinet temporisé dans lequel le passage du fluide d'alimentation s'effectue dès que l'obturateur est sorti de son siège, que l'utilisateur continue ou non d'actionner les moyens de commande, par exemple continue d'appuyer sur le bouton poussoir. Tout en restant dans le domaine de l'invention, on peut prévoir des moyens supplémentaires, classiques dans le domaine, pour empêcher le passage du fluide d'alimentation tant que l'utilisateur continue d'actionner les moyens de commande, par exemple continue d'appuyer sur le bouton poussoir, le passage du fluide entre les ouvertures d'entrée et de sortie ne pouvant s'effectuer qu'une fois que l'utilisateur cesse d'appliquer son action sur les moyens de commande.

De manière générale, les viscosités des fluides, notamment dynamiques, pour leur comparaison, sont déterminées à la température ambiante, notamment à 20°C. Leur mesure est effectuée à l'aide d'un viscosimètre classique.

Suivant un perfectionnement, on peut prévoir des moyens pour commander l'ouverture de force du clapet antiretour, ce qui entraîne le remplissage instantané de la chambre pneumatique et par conséquent l'annulation de la temporisation et la fermeture immédiate ou quasiimmédiate du robinet.

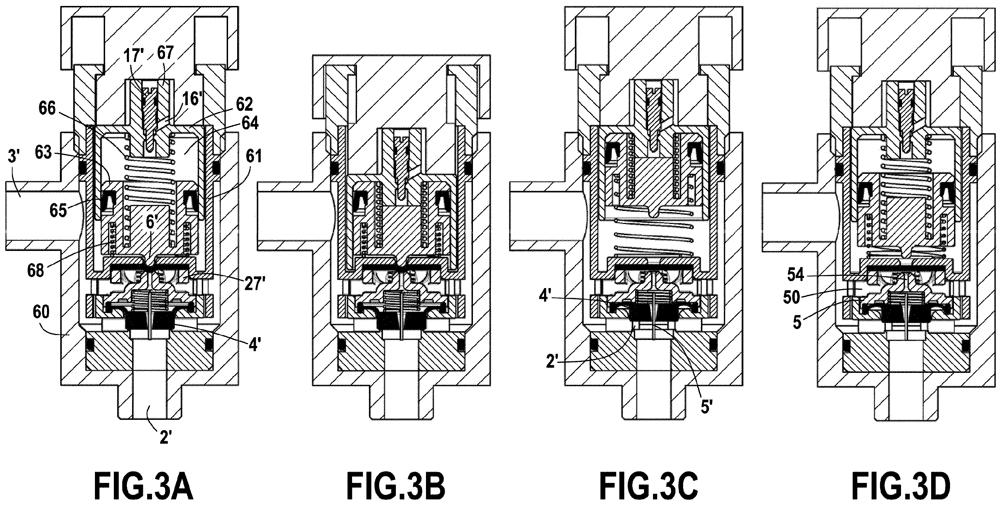

Aux figures 3A à 3D, il est représenté une cartouche de temporisation suivant un mode de réalisation de l'invention.

La cartouche de temporisation représentée comporte un corps 60 principal sensiblement cylindrique circulaire. Le corps principal 60 comporte à son extrémité inférieure une ouverture 2' d'arrivée ou d'alimentation en eau, des ouvertures 3' radiales de sortie étant disposées également à la partie inférieure du corps. Un obturateur 4' principal sous la forme d'une membrane comportant un fil frein 5' est reçu dans un siège formé dans l'ouverture 2'.

Dans la partie supérieure du corps principal 60 est reçu un premier bloc 61 supérieur sensiblement cylindrique circulaire ou tubulaire dans lequel est disposé un élément 62 tubulaire supérieur, ouvert dans le fond et pouvant coulisser dans le sens vertical à l'intérieur du premier bloc 61, et un élément 63 tubulaire inférieur pouvant coulisser dans l'élément 62 tubulaire supérieur le long de sa paroi intérieure de manière à définir entre les deux éléments une chambre de temporisation 64 dont le volume varie en fonction du coulissement relatif des deux éléments 62 et 63. Un clapet en forme de joint 65 à lèvre disposé entre les deux éléments en étant solidaire de l'élément 63 inférieur assure l'étanchéité de la chambre 64 lorsqu'elle est pleine et permet sa vidange lorsque l'air est poussé vers le bas.

Un élément 67 poussoir s'étend de la paroi supérieure de l'élément 62 supérieur en traversant la paroi supérieure du bloc 60 et en faisant saillie hors du corps principal.

Un ressort 66 supérieur prend appui entre la paroi supérieure de l'élément 62 et la paroi de fond de l'élément 63 inférieur. Lorsque la chambre 64 a son volume maximum (figure 3A), le ressort est à l'état non comprimé ou de repos.

Un ressort 68 inférieur prend appui entre la paroi de fond de l'élément 63 inférieur et la paroi de fond du bloc 61. Lorsque la chambre 64 a son volume maximum (figure 3A), le ressort est à l'état comprimé.

Un plongeur 6' s'étend de la paroi de fond de l'élément 63 tubulaire inférieur et traverse la paroi de fond du bloc 61. Une membrane 27', notamment en matériau élastomère imperméable, est disposée en face du trou de traversée pour le plongeur 6' de la paroi de fond du bloc 61, en étant plaquée contre la face inférieure du bloc 61. Elle pourrait, sans que cela soit nécessaire, être fixée, par exemple par soudure, collage ou analogue, le long de son bord périphérique à la face inférieure du bloc 61. Lorsque le plongeur 6' est poussé hors du bloc 61, il vient porter contre la membrane 27' et en éloigner la partie centrale de la paroi de fond du bloc 61.

Il est également disposé dans le corps 60 principal de la cartouche un bloc 70 inférieur de forme sensiblement cylindrique qui définit des entrée et sorties du fluide d'alimentation ainsi que le siège principal de l'obturateur 4'.

Entre les deux blocs supérieur et inférieur, il est formé un espace 50 intérieur dans lequel est reçu un élément annulaire 51, comportant un canal 54 central vertical le traversant de part en part. L'espace 50 intérieur est divisé, par l'interposition de l'élément 51 annulaire, en deux sous espaces respectivement supérieur et inférieur en communication pour les fluides par le canal 54 central. La sortie supérieure du canal 54 vertical se trouve en face de la partie centrale de la membrane 27' et du plongeur 6'.

Le fonctionnement de la cartouche des figures 3A à 3D est le suivant.

Dans la position représentée à la figure 3A, l'obturateur ou membrane 4' principal est dans son siège et empêche le passage du fluide d'alimentation de l'ouverture d'entrée vers les ouvertures de sortie latérales. La chambre 64 de temporisation est remplie de fluide de temporisation (de l'air ici) de sorte que le plongeur 6' est maintenu vers le bas et presse la membrane 27' contre le bord de l'ouverture supérieure du canal 54, empêchant ainsi le fluide d'alimentation présent dans le sous espace inférieur de passer dans le sous espace supérieur de l'espace 50 malgré la pression du fluide à l'entrée 2'. Le sous espace inférieur est totalement empli du fluide d'alimentation par l'intermédiaire du fil frein 5', la pression du fluide pressant la membrane 4' dans son siège. L'élément poussoir 67 n'est pas pressé vers le bas et fait saillie hors du corps principal 60 et du bloc 61. L'effort du ressort 66 contenu dans la chambre 64 de temporisation principale est supérieure à la force exercée par le ressort 68 comprimé.

A la figure 3B, l'utilisateur a pressé l'élément 67 poussoir. L'air contenu dans la chambre 64 de temporisation a été chassé vers le bas au niveau de l'extrémité périphérique inférieure de la lèvre du joint 65 à lèvre, puis renvoyé vers haut le long des parois latérales entre les parois du bloc 61 supérieur et celle de l'élément 62 tubulaire pour ressortir par l'ouverture supérieure du bloc 61. La chambre 64 de temporisation initialement remplie d'air s'est vidée et le ressort 66 supérieur est comprimé sous l'action de la poussée de l'utilisateur. Le plongeur 6' continue de presser sur la membrane 27'. Ainsi, tant que l'utilisateur maintient la pression sur l'élément 67 poussoir, le robinet reste fermé, l'ouverture pour le passage du fluide d'alimentation ne pouvant avoir lieu qu'après relâchement de la pression sur l'élément 67.

A la figure 3C, l'utilisateur a relâché la pression sur l'élément poussoir 67. Le ressort 68 inférieur comprimé n'ayant plus en opposition l'effort du ressort 66 (qui reste comprimé en raison de la dépression dans la chambre de temporisation) de la chambre 64 à supporter entraîne la remontée des deux éléments tubulaires 62 et 63 supérieur et inférieur, et par conséquent une remontée du plongeur 6' qui sort ainsi de son contact avec la membrane 27'. Il en résulte une remontée de la partie centrale de la membrane 27' et l'ouverture du canal 54 vers le haut. Le fluide d'alimentation qui se trouvait jusqu'à maintenant bloqué à la sortie du canal 54 peut passer dans le sous espace supérieur et s'évacuer par des sorties latérales de ce sous espace. Il en résulte une diminution de la pression exercée par l'eau du sous espace inférieur sur la membrane principale 4' qui, sous l'effet de l'eau entrant par l'entrée 2' se soulève et permet un passage du fluide d'alimentation (l'eau) vers les sorties 3' latérales. Dans le même temps, le ressort 66 supérieur a été comprimé et la chambre 64 reste vide. Cependant, de l'air commence à pénétrer de nouveau par le haut par des orifices 16' à clapet appropriés formés dans l'élément 67 poussoir et dont la section peut être réglée par une tige 17' de réglage.

Au fur à mesure que de l'air ou fluide de temporisation emplit de nouveau la chambre 64, l'élément tubulaire 63 inférieur, sous l'effet de la pression de l'air et du ressort 66 supérieur comprimé, redescend, entraînant avec lui le plongeur 6' (figure 3D) jusqu'à ce que ce dernier vienne presser la membrane 27' contre le bord de la sortie du canal 54, ce qui a pour effet d'augmenter la pression dans la partie supérieure de la membrane principale et ainsi presser de nouveau la membrane 4' principale de nouveau dans son siège pour bloquer le passage de l'eau entre l'entrée 2' et les sorties 3' (figure 3A).

Aux figures 3C et 3D, on peut voir que le fluide d'alimentation (l'eau), sort vers le haut, après avoir été rejoint par l'eau sortant du sous espace supérieur.

## Revendications

1. Dispositif formant robinet temporisé ou cartouche de temporisation pour un dispositif formant robinet temporisé, comportant au moins une ouverture (2') d'entrée de fluide d'alimentation, notamment hydraulique, par exemple de l'eau, et au moins une ouverture (3') de sortie de fluide d'alimentation ; un obturateur (4') principal pouvant être reçu dans un siège principal formé dans l'une des au moins une ouverture de sortie ou d'entrée pour fermer le robinet et être sorti du siège principal pour ouvrir le robinet et permettre le passage du fluide d'alimentation entre les ouvertures d'entrée et de sortie ; des moyens de commande, comportant un élément poussoir (67), pour commander le déplacement de l'obturateur principal par l'intermédiaire d'une tige (6') de commande ; et des moyens de temporisation destinés à ramener l'obturateur principal dans son siège au bout d'un intervalle de temps déterminé à l'avance après sa sortie, un élément (27') formant obturateur intermédiaire et un siège intermédiaire associé étant en outre prévus, l'agencement étant tel que le déplacement entre les positions dans le siège intermédiaire et hors du siège intermédiaire de l'obturateur intermédiaire est commandé par les moyens de temporisation, une synchronisation étant réalisée entre les mouvements des obturateurs respectivement principal et intermédiaire par l'intermédiaire du fluide d'alimentation, et l'agencement étant tel que tant que l'utilisateur maintient la pression sur l'élément poussoir (67), le robinet reste fermé, l'ouverture pour le passage du fluide d'alimentation ne pouvant avoir lieu qu'après relâchement de la pression sur l'élément (67), **caractérisé en ce que** l'obturateur intermédiaire est constitué d'une membrane (27') souple, notamment en matériau élastomère, la tige d'actionnement venant pousser la membrane (27') dans le siège intermédiaire pour faire passer l'obturateur (4') principal également dans le siège principal et la tige s'éloignant et sortant de sa liaison mécanique avec la membrane (27') pour la libérer, pour la faire sortir de son siège intermédiaire et par la même faire sortir l'obturateur (4') principal de son siège principal.

2. Dispositif formant robinet temporisé ou cartouche de temporisation pour un dispositif formant robinet temporisé suivant la revendication 1, **caractérisé en ce que** la synchronisation des obturateurs (4', 27') principal et intermédiaire est telle que lorsque l'obturateur intermédiaire est dans son siège intermédiaire, l'obturateur principal est également dans son siège principal et, lorsque l'obturateur intermédiaire n'est pas dans son siège intermédiaire, l'obturateur principal n'est pas non plus dans son siège principal.

3. Dispositif formant robinet temporisé ou cartouche de temporisation pour un dispositif formant robinet temporisé suivant la revendication 1 ou 2, **caractérisé en ce que** les moyens de temporisation comportent une chambre de temporisation principale qui agit sur le déplacement de la tige de commande, la chambre de temporisation étant remplie d'un fluide de temporisation, notamment différent du fluide d'alimentation, par exemple de l'air.

4. Dispositif formant robinet temporisé ou cartouche de temporisation pour un dispositif formant robinet temporisé suivant l'une des revendications 1 à 3, **caractérisé en ce qu'**il est prévu une chambre de décharge intermédiaire qui peut se remplir du fluide d'alimentation entre les deux obturateurs, l'agencement de la synchronisation étant tel que, lorsque les deux obturateurs principal et intermédiaire sont reçus dans leur siège respectif, la chambre de décharge intermédiaire est vide ou sensiblement vide et, lorsque les deux obturateurs intermédiaire et principal sont sortis de leur siège respectif, la chambre de décharge intermédiaire est remplie de fluide d'alimentation.

5. Dispositif formant robinet temporisé ou cartouche de temporisation pour un dispositif formant robinet temporisé suivant l'une des revendications 1 à 4, **caractérisé en ce que** le siège principal de l'obturateur principal est disposé axialement par rapport au robinet, tandis que l'autre ouverture d'entrée-sortie est disposée radialement.

6. Dispositif formant robinet temporisé ou cartouche de temporisation pour un dispositif formant robinet temporisé suivant la revendication 5, **caractérisé en ce que** l'ouverture axiale est l'ouverture d'arrivée d'eau, tandis que la ou les ouverture(s) de sortie d'eau est/sont disposée(s) radialement.

7. Dispositif formant robinet temporisé ou cartouche de temporisation pour un dispositif formant robinet temporisé suivant l'une des revendications 1 à 6, **caractérisé en ce que** le déplacement de la tige de commande pour commander le passage de l'obturateur hors de son siège se fait par poussée vers l'obturateur.

8. Dispositif formant robinet temporisé ou cartouche de temporisation pour un dispositif formant robinet temporisé suivant l'une des revendications 1 à 6, **caractérisé en ce qu'**il est prévu des moyens d'évacuation sans retour du fluide de temporisation de la chambre de temporisation, notamment un joint (65) à lèvre.

## Patentansprüche

1. Vorrichtung bildend einen mit einem Zeitgeber betriebenen Hahn oder eine zeitgesteuerte Kartusche für eine Vorrichtung bildend einen mit einem Zeitgeber betriebenen Hahn, umfassend mindestens eine Öffnung (2') für den Einlass von Versorgungsfluid, insbesondere hydraulisch, zum Beispiel Wasser, und mindestens eine Öffnung (3') zum Auslass von Versorgungsfluid; einen Hauptverschluss (4'), der in einem Hauptsitz, der in einer der mindestens einen Auslass- oder Einlassöffnung ausgebildet ist, aufgenommen werden kann, um den Hahn zu schliessen, und aus dem Hauptsitz herausgeführt werden kann, um den Hahn zu öffnen und den Durchgang des Versorgungsfluids zwischen den Einlass- und Auslassöffnungen zu ermöglichen; Steuermittel, umfassend ein Druckelement (67), um die Verlagerung des Hauptverschlusses mithilfe einer Steuerstange (6') zu steuern; und zeitgesteuerte Mittel, die dazu bestimmt sind, den Hauptverschluss nach einem vorab bestimmten Zeitintervall nach seinem Austritt in seinen Sitz zurückzuführen, wobei ausserdem ein einen Zwischenverschluss bildendes Element (27') und ein verbundener Zwischensitz vorgesehen sind, so ausgelegt, dass die Verlagerung zwischen den Positionen im Zwischensitz und ausserhalb des Zwischensitzes des Zwischenverschlusses durch die zeitgesteuerten Mittel gesteuert wird, wobei eine Synchronisation zwischen den Bewegungen des Haupt- beziehungsweise des Zwischenverschlusses mithilfe des Versorgungsfluids ausgeführt wird, und so ausgelegt ist, dass, solange der Nutzer den Druck auf das Druckelement (67) beibehält, der Hahn geschlossen bleibt, wobei das Öffnen für den Durchgang des Versorgungsfluids erst nach dem Nachlassen des Drucks auf das Element (67) erfolgen kann, **dadurch gekennzeichnet, dass** der Zwischenverschluss aus einer weichen Membran (27'), insbesondere aus Elastomermaterial, besteht, wobei die Stange zum Betätigen die Membran (27') in den Zwischensitz drückt, um den Hauptverschluss (4') gleichzeitig in den Hauptsitz zu führen, und die Stange sich entfernt und sich aus ihrer mechanischen Verbindung mit der Membran (27') löst, um sie freizugeben, um sie aus ihrem Zwischensitz heraustreten zu lassen und dadurch den Hauptverschluss (4') aus seinem Hauptsitz heraustreten zu lassen.

2. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 1, **dadurch gekennzeichnet, dass** die Synchronisation des Haupt- und des Zwischenverschlusses (4', 27') dergestalt ist, dass, wenn der Zwischenverschluss sich in seinem Zwischensitz befindet, der Hauptverschluss sich gleichzeitig in seinem Hauptsitz befindet, und wenn der Zwischenverschluss sich nicht in seinem Zwischensitz befindet, der Hauptverschluss sich auch nicht in seinem Hauptsitz befindet.

3. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 1 oder 2, **dadurch gekennzeichnet, dass** die zeitgesteuerten Mittel eine zeitgesteuerte Hauptkammer umfassen, die auf die Verlagerung der Steuerstange wirkt, wobei die zeitgesteuerte Kammer mit einem sich insbesondere von dem Versorgungsfluid unterscheidenden zeitgesteuerten Fluid gefüllt ist, zum Beispiel Luft.

4. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 1 bis 3, **dadurch gekennzeichnet, dass** eine Zwischenablaufkammer vorgesehen ist, die zwischen den beiden Verschlüssen mit dem Versorgungsfluid gefüllt werden kann, wobei die Synchronisation so ausgelegt ist, dass bei der Aufnahme der beiden Haupt- und Zwischenverschlüsse in ihrem jeweiligen Sitz die Zwischenablaufkammer leer oder im Wesentlichen leer ist, und beim Heraustreten der beiden Haupt- und Zwischenverschlüsse aus ihrem jeweiligen Sitz die Zwischenablaufkammer mit Versorgungsfluid gefüllt wird.

5. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 1 bis 4, **dadurch gekennzeichnet, dass** der Hauptsitz des Hauptverschlusses axial in Bezug auf den Hahn angeordnet ist, während die andere Einlass-Auslass-Öffnung radial angeordnet ist.

6. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 5, **dadurch gekennzeichnet, dass** die axiale Öffnung die Öffnung für die Wasserzufuhr ist, während die Wasserauslassöffnung oder -öffnungen radial angeordnet ist/sind.

7. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 1 bis 6, **dadurch gekennzeichnet, dass** die Verlagerung der Steuerstange zur Steuerung des Durchgangs des Verschlusses aus seinen Sitz heraus durch Schieben gegen den Verschluss erfolgt.

8. Vorrichtung bildend einen mit einem Zeitgeber betriebenen Hahn oder eine zeitgesteuerte Kartusche für eine Vorrichtung bildend einen mit einem Zeitgeber betriebenen Hahn nach Anspruch 1 bis 6, **dadurch gekennzeichnet, dass** Mittel zum Abführen ohne Rücklauf des zeitgesteuerten Fluids aus der zeitgesteuerten Kammer, insbesondere eine Lippendichtung (65), vorgesehen sind.

## Claims

1. Device forming a timer-operated tap or timer cartridge for a device forming a timer-operated tap, comprising at least one inlet opening (2') for supply fluid, in particular hydraulic fluid, for example water, and at least one outlet opening (3') for supply fluid; a main closure member (4') being capable of being received in a main seat formed in one of the at least one outlet or inlet openings to close the tap and of being removed from the main seat in order to open the tap and allow the passage of the supply fluid between the inlet and outlet openings; control means comprising a push element (67) to control the movement of the main closure member by means of a control rod (6'); and timer means intended for moving the main closure member into its seat at the end of a preset time interval following its removal, an element (27') forming an intermediate closure member and an associated intermediate seat also being provided, the arrangement being such that the movement between the positions in the intermediate seat and outside the intermediate seat of the intermediate closure member is controlled by the timer means, a synchronisation being carried out between the movements of the main and intermediate closure members respectively by means of the supply fluid, and the arrangement being such that, as long as the user keeps the pressure on the push element (67), the tap remains closed, the opening thereof for the passing of the supply fluid being possible only after releasing the pressure on the element (67), **characterised in that** the intermediate closure member comprises a flexible membrane (27'), especially made from an elastomer material, the actuating rod pushing the membrane (27') into the intermediate seat so that the main closure member (4') is also pushed into the main seat and the rod moves away from and leaves its mechanical connection with the membrane ((27') to release it, causing it to leave its intermediate seat and by the same token causing the main closure member (4') to leave its main seat.

2. Device forming a timer-operated tap or timer cartridge for a device forming a timer-operated tap according to claim 1, **characterised in that** synchronisation of the main and intermediate closure members (4', 27') is such that when the intermediate closure member is in its intermediate seat, the main closure member is also in its main seat, and when the intermediate closure member is not in its intermediate seat, the main closure member is not in its main seat either.

3. Device forming a timer-operated tap or timer cartridge for a device forming a timer-operated tap according to either claim 1 or claim 2, **characterised in that** the timer means comprise a main timer chamber that affects the displacement of the control rod, the timer chamber being filled with a timer fluid, especially a different fluid to the supply fluid, for example, air.

4. Device forming a timer-operated tap or timer cartridge for a device forming a timer-operated tap according to any one of claims 1 to 3, **characterised in that** an intermediate discharge chamber is provided, said chamber being able to fill with supply fluid between the two closure members, the synchronisation arrangement being such that, when the two main and intermediate closure members are received in their respective seat, the intermediate discharge chamber is empty or substantially empty and, when the two intermediate and main closure members have left their respective seat, the intermediate discharge chamber is filled with supply fluid.

5. Device forming a timer-operated tap or timer cartridge for a device forming a timer-operated tap according to any one of claims 1 to 4, **characterised in that** the main seat of the main closure member is arranged axially in relation to the tap, while the other inlet-outlet opening is arranged radially.

6. Device forming a timer-operated tap or timer cartridge for a device forming a timer-operated tap according to claim 5, **characterised in that** the axial opening is the water inlet opening, while the water outlet opening or openings is/are arranged radially.

7. Device forming a timer-operated tap or timer cartridge for a device forming a timer-operated tap according to any one of claims 1 to 6, **characterised in that** displacement of the control rod to control the passage of the closure member out of its seat takes place by pushing towards the closure member.

8. Device forming a timer-operated tap or timer cartridge for a device forming a timer-operated tap according to any one of claims 1 to 6, **characterised in that** non-return evacuation means are provided for the timer fluid in the timer chamber, specifically a lip seal (65).
